# FASCICULE DE BREVET EUROPEEN

(11) **EP 0 781 448 B1**
(45) Date de publication et mention de la délivrance du brevet: **16.02.2000**
(21) Numéro de dépôt: 95930575.6
(22) Date de dépôt: 12.09.1995
(51) Int. Cl.: G11B 5/39

(54) **TETE MAGNETIQUE PLANAIRE A MAGNETORESISTANCE MULTICOUCHE LONGITUDINALE**
PLANARER MAGNETKOPF MIT LONGITUDINALEM MEHRSCHICHTMAGNETOWIDERSTAND
PLANAR MAGNETIC HEAD COMPRISING A LONGITUDINAL MULTILAYERED MAGNETORESISTOR

(30) Priorité: 13.09.1994 FR 9410895
(43) Date de publication de la demande: 02.07.1997
(73) Titulaire: COMMISSARIAT A L'ENERGIE ATOMIQUE, 75015 Paris (FR); SILMAG S.A., 38054 Grenoble Cédex 9 (FR)
(72) Inventeur: FEDELI, Jean-Marc, F-38140 Beaucroissant (FR)
(74) Mandataire: Signore, Robert
(86) Numéro de dépôt international: FR9501168
(87) Numéro de publication internationale: WO9608814

(56) Documents cités:
- EP-A- 0 475 397
- EP-A- 0 560 350
- EP-A- 0 652 550
- EP-A- 0 702 358
- GB-A- 2 047 943
- US-A- 5 301 079
- IEEE TRANSACTIONS ON MAGNETICS, vol. 25, no. 5, Septembre 1989 NEW YORK US, pages 3689-3691, XP 000069187 D. W. CHAPMAN ET AL. 'A New, Horizontal MR Head Structure'
- PATENT ABSTRACTS OF JAPAN vol. 16 no. 117 (P-1328) ,24 Mars 1992 & JP,A,03 286413 (MATSUSHITA ELECTRIC IND CO LTD) 17 Décembre 1991,
- PATENT ABSTRACTS OF JAPAN vol. 13 no. 85 (P-834) ,27 Février 1989 & JP,A,63 266619 (SHARP CORP) 2 Novembre 1988,

## Description

### Domaine technique

La présente invention a pour objet une tête magnétique planaire à magnétorésistance multicouche longitudinale. Elle trouve une application dans l'enregistrement magnétique. La tête de l'invention peut être à lecture seule et constituer un capteur, ou être à lecture et à écriture.

### Etat de la technique

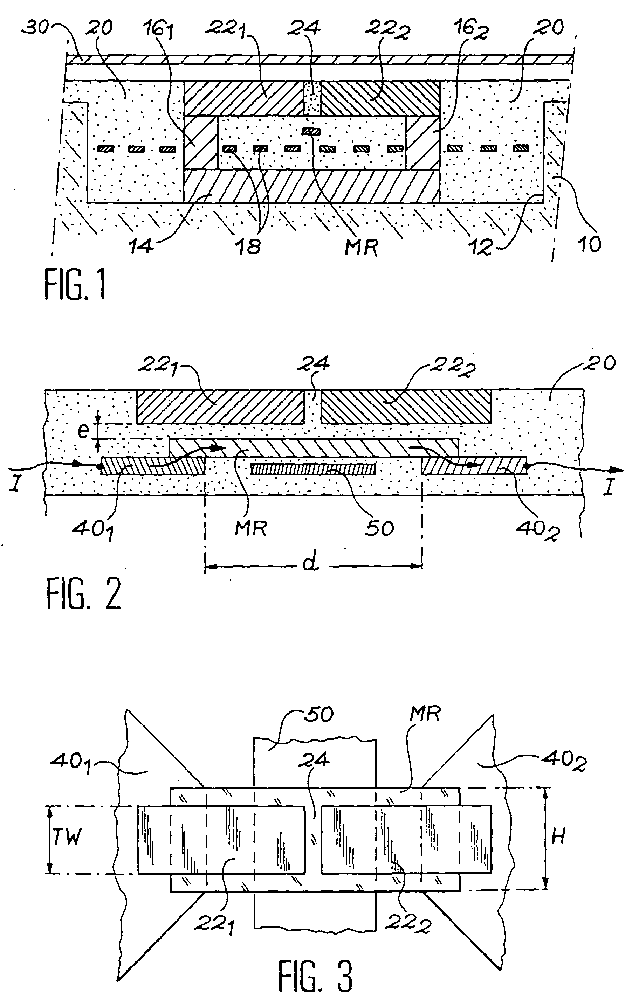

L'invention s'applique essentiellement aux têtes dites horizontales à couches minces. Une telle tête est représentée sur la figure 1 annexée.

Sur cette figure, on voit, en coupe, une tête comprenant un substrat semiconducteur 10, par exemple en silicium, dans lequel a été gravé un caisson 12. Dans ce caisson, une couche magnétique inférieure 14 a été formée, par exemple électrolytiquement, et a été prolongée par deux plots verticaux 16₁ 16₂. Un bobinage conducteur 18 entoure les plots. Il est noyé dans une couche isolante 20. Le circuit magnétique se complète par une couche magnétique supérieure séparée en deux pièces polaires 22₁, 22₂ tenues écartées par un espaceur amagnétique 24 formant entrefer.

Un élément magnétorésistant MR, en matériau monolithique (par exemple en Fe-Ni), est disposé sous l'espaceur amagnétique 24. La tête se déplace devant un support magnétique 30 où sont enregistrées les informations à lire ou à écrire.

Une telle tête est décrite dans le document FR-A-2 657 189.

Le fonctionnement de cette tête est schématiquement le suivant. A l'écriture, le courant circulant dans le bobinage 18 crée un champ magnétique et, par conséquent, une induction dans le circuit magnétique. Les lignes de champ qui s'épanouissent autour de l'espaceur 24 induisent une aimantation dans le support 30.

A la lecture, une information magnétique enregistrée sur une piste du support 30 produit un champ magnétique de lecture et, par conséquent, une induction dans le circuit magnétique. Cette induction se referme, en partie, à travers l'élément magnétorésistant MR. Il en résulte une aimantation dans cet élément, qui va provoquer une variation de résistance de celui-ci. Des moyens non représentés permettent de mesurer cette variation de résistance et de remonter ainsi à l'information enregistrée sur le support.

Bien que donnant satisfaction à certains égards, de telles têtes présentent un inconvénient lorsque la largeur de la piste à lire devient faible. Pour une largeur de quelques micromètres (par exemple 2 µm), la longueur de la magnétorésistance (comptée dans le sens transversal, c'est-à-dire perpendiculairement à la piste) devient de l'ordre de quelques microns (par exemple 3 µm) ce qui est justement l'ordre de grandeur de la largeur de la magnétorésistance (2 à 3 µm). La magnétorésistance prend une forme sensiblement carrée avec de très faibles dimensions. Il est alors très difficile d'obtenir une résistance adaptée au circuit de détection, résistance qui est généralement de l'ordre de 50 Ohms, ce qui nécessiterait une couche beaucoup trop mince pour être utilisable.

La présente invention a justement pour but de remédier à cet inconvénient.

Le document JP-B-286 413 décrit un dispositif analogue avec seulement deux pièces polaires sensiblement planes et séparées par un entrefer. Un élément magnétorésistant est placé juste sous l'entrefer, le tout reposant sur un substrat. Cet élément magnétorésistant fonctionne en mode transversal, comme dans la tête décrite dans FR-A-2 657 189 déjà cité.

On connaît d'autres têtes magnétiques telles que décrites dans le document EP 0 475 397 qui reflète le préambule de la revendication 1. Dans ce type de têtes, il est prévu un entrefer auxiliaire dans le circuit magnétique, en plus de l'entrefer principal séparant les pièces polaires. L'élément magnétorésistant est disposé sous l'entrefer principal, mais il travaille en mode transversal. De plus, les pièces polaires ne sont pas planes.

L'élément magnétorésistant est donc très éloigné de l'entrefer principal. De plus, cet élément étant en contact avec les pièces polaires, il forme un véritable second circuit magnétique.

Le document EP-0 652 550, qui est un état de la technique selon l'article 54(3)CBE, décrit une tête magnétique de lecture à élément magnétorésistant multicouche mais dont les pièces polaires ne sont pas planes.

Le document EP-0 702 358 décrit une tête magnétique à magnétorésistance multicouche avec une couche magnétique déposée sur deux flancs inclinés.

### Exposé de l'invention

L'invention conserve la disposition consistant à placer l'élément magnétorésistant juste sous l'entrefer. Mais l'invention propose, d'une part, d'utiliser, comme élément magnétorésistant, une magnétorésistance d'un type particulier, à savoir du type multicouche (et non plus monolithique) et, d'autre part, de faire fonctionner cette magnétorésistance en mode longitudinal (et non plus transversal).

On sait que les matériaux magnétorésistants multicouches sont constitués d'un empilement de couches magnétiques séparées par des couches métalliques non magnétiques.

Les structures métalliques multicouches utilisent le cobalt, le fer, le cuivre, le chrome, le nickel, les alliages de fer et de nickel, l'argent, l'or, le molybdène, le ruthénium et le manganèse, comme décrit dans l'article de H. YAMAMOTO et T. SHINJO, publié dans la revue "IEEE Translation Journal on Magnetics in Japan", vol. 7, n°9, septembre 1992, sous le titre "Magnetoresistance of Multilayers", p. 674-684).

Un tel élément peut fonctionner en mode longitudinal si le courant de mesure qui le traverse et le champ magnétique qu'il détecte sont colinéaires et dirigés dans le sens de la longueur de l'élément.

Une magnétorésistance multicouche utilisée en mode longitudinal est soit "à valve de spins", soit à couplage antiferromagnétique (c'est-à-dire qu'en champ nul, les couches magnétiques présentent alternativement une aimantation opposée). L'invention s'applique plus particulièrement à ce dernier type de magnétorésistance.

L'utilisation d'une magnétorésistance multicouche, selon l'invention, permet un couplage étroit entre les deux pièces polaires supérieures de la tête et la magnétorésistance. Comme le flux magnétique parcourant la magnétorésistance est dans le sens même du courant qui la parcourt, ce sens étant par ailleurs celui de la direction longitudinale de l'élément, l'effet des champs démagnétisants est réduit et, par suite, la sensibilité de la tête est accrue.

De façon précise, la présente invention a donc pour objet une tête magnétique de lecture comprenant un circuit magnétique comprenant deux pièces polaires séparées par un entrefer et un ruban magnétorésistant plat constitué par une magnétorésistance multicouche et disposé sous les pièces polaires et sous l'entrefer, caractérisé en ce que le circuit magnétique est uniquement constitué par les deux pièces polaires et ne comprend qu'un entrefer unique, lesdites pièces polaires étant planes, la tête étant ainsi planaire, le ruban magnétorésistant plat comprenant un empilement de couches magnétiques séparées par des couches métalliques non magnétiques, cette magnétorésistance s'étendant longitudinalement sous les pièces polaires et sous l'entrefer unique et travaillant en mode longitudinal.

### Brève description des dessins

- la figure 1, déjà décrite, représente une tête planaire selon l'art antérieur ;
- la figure 2 montre, en coupe, un mode de réalisation d'une tête magnétique de lecture conforme à l'invention ;
- la figure 3 est une vue de dessus correspondante ;
- la figure 4 illustre un mode de réalisation du conducteur de polarisation et de la magnétorésistance ;
- la figure 5 montre, en coupe, une tête de lecture et d'écriture conforme à l'invention ;
- les figures 6A, 6B, 6C et 6D illustrent quatre étapes d'un procédé de réalisation de la partie supérieure d'une tête selon l'invention.

### Exposé détaillé de modes de réalisation

La figure 2 montre, en coupe, un mode de réalisation d'une tête magnétique de lecture selon l'invention. Sur cette figure, on retrouve des éléments

### Exposé détaillé de modes de réalisation

La figure 2 montre, en coupe, un mode de réalisation d'une tête magnétique de lecture selon l'invention. Sur cette figure, on retrouve des éléments déjà représentés sur la figure 1, à savoir les deux pièces polaires 22₁, 22₂ séparées par l'espaceur 24 définissant l'entrefer. Selon l'invention, l'élément magnétorésistant MR est du type multicouche et longitudinal et présente la forme d'un ruban sensiblement plat. Ce ruban est relié à deux contacts électriques 40₁, 40₂. Ces contacts et un générateur de courant non représenté permettent de faire circuler dans la magnétorésistance un courant I dans le sens longitudinal.

Telle que représentée, la tête comprend encore un conducteur de polarisation 50 disposé transversalement (perpendiculairement au plan de la figure).

La figure 3 montre ces mêmes moyens mais en vue de dessus. On peut y voir la forme évasée des contacts électriques 40₁, 40₂ et la direction transversale du conducteur 50.

La distance d entre les contacts 40₁, 40₂ fixe la longueur électrique de la magnétorésistance. Cette longueur est ajustée de façon à obtenir un maximum de couplage entre les pôles 22₁ et 22₂ et un maximum de signal compte tenu de la largeur de la piste. Elle est généralement comprise entre 2 et 20 µm selon la largeur de la piste ; elle se situe par exemple autour de 8 µm pour une piste de 5 µm.

La largeur H de la magnétorésistance MR est déterminée en fonction de la distance e séparant la magnétorésistance des pièces polaires 22₁, 22₂. Elle est de l'ordre de la largeur TW des pièces polaires, éventuellement légèrement inférieure ou légèrement supérieure. La largeur TW des pièces polaires peut être de l'ordre de 2 µm et la largeur H de l'ordre de 3 µm.

Le courant longitudinal I qui parcourt la magnétorésistance crée un champ magnétique s'enroulant autour des lignes de courant et dirigé, par conséquent, perpendiculairement au plan de la figure 2, au niveau des deux pièces polaires 22₁, 22₂. Ce champ a pour effet de stabiliser les domaines magnétiques dans lesdites pièces polaires.

Le conducteur de polarisation 50 peut être en CrAu, en TaAu, en TiW ou en TiWAu. Ce conducteur peut éventuellement comporter une fine couche magnétique, afin d'augmenter son efficacité.

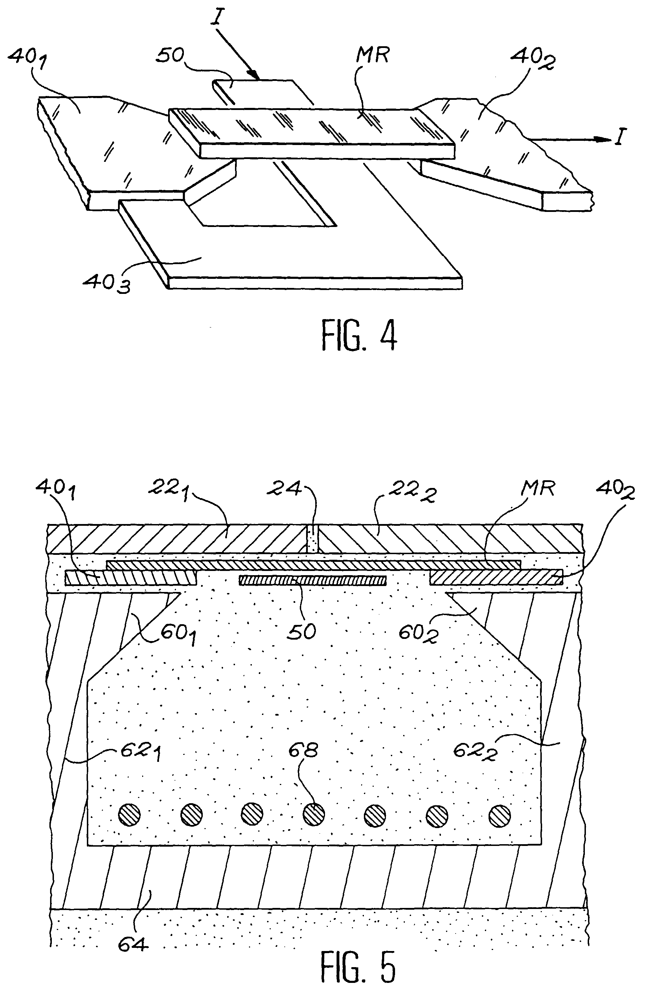

Sur la figure 4 est illustré un mode particulier de réalisation de la magnétorésistance MR et du conducteur de polarisation 50. Les deux éléments sont connectés en série grâce à un élément de connexion 40₃ relié au contact d'extrémité 40₁. De cette manière, le courant I qui circule dans la magnétorésistance MR circule également dans l'élément conducteur 50 servant à la polarisation de la magnétorésistance.

Dans cette variante, le conducteur de polarisation 50 est avantageusement réalisé dans le même matériau que la magnétorésistance. Il peut donc être, lui aussi, magnétorésistif. Naturellement, il s'agira d'un effet magnétorésistif transversal et non longitudinal comme dans la magnétorésistance principale MR. Cependant, cet effet annexe, lié au flux magnétique qui ne sera pas passé par la magnétorésistance principale MR mais sera en partie récupéré par l'élément conducteur, améliorera la sensibilité globale de la tête.

La tête qui vient d'être décrite sert uniquement à la lecture d'informations magnétiques. En d'autres termes, il s'agit d'un capteur. On peut compléter le dispositif décrit pour le rendre, en outre, apte à l'écriture d'informations sur un support. On obtiendra alors une tête de lecture et d'écriture.

Une telle tête est représentée, en coupe, sur la figure 5. Les éléments déjà représentés sur les figures 2 et 3 portent les mêmes références, à savoir les deux pièces polaires 22₁, 22₂, l'entrefer amagnétique 24, la magnétorésistance MR, les contacts 40₁, 40₂ et le conducteur de polarisation 50. La tête représentée comprend, en outre, un circuit magnétique de fermeture du flux, qui est constitué, dans l'exemple illustré, par deux concentrateurs 60₁, 60₂, deux piliers 62₁, 62₂ et une couche magnétique intérieure 64.

Le dispositif comprend encore un enroulement conducteur 68 couplé au circuit magnétique. Il s'agit en général d'un double enroulement spiralé. C'est à travers cet enroulement que circule le courant d'écriture.

Dans ce dispositif, la magnétorésistance MR n'est pas en contact électrique avec le circuit de fermeture du flux, mais ses extrémités sont disposées dans ce circuit. Lors de la phase d'écriture, les extrémités de la magnétorésistance seront saturées par le champ d'écriture ce qui ne gênera pas l'écriture.

Les figures 6A à 6D montrent quatre étapes d'un procédé de réalisation d'une tête de lecture selon l'invention (ou de la partie supérieure d'une tête de lecture et d'écriture). On part d'un substrat 70 (ou d'un sous-ensemble comprenant déjà un circuit de fermeture du flux avec son enroulement). Sur ce substrat, on dépose une couche isolante 72 (Fig. 6A).

On dépose ensuite une couche métallique que l'on grave en trois éléments, un élément central 50 qui constituera le futur conducteur de polarisation et deux éléments d'extrémité 40₁, 40₂ qui formeront les futurs plots de contact.

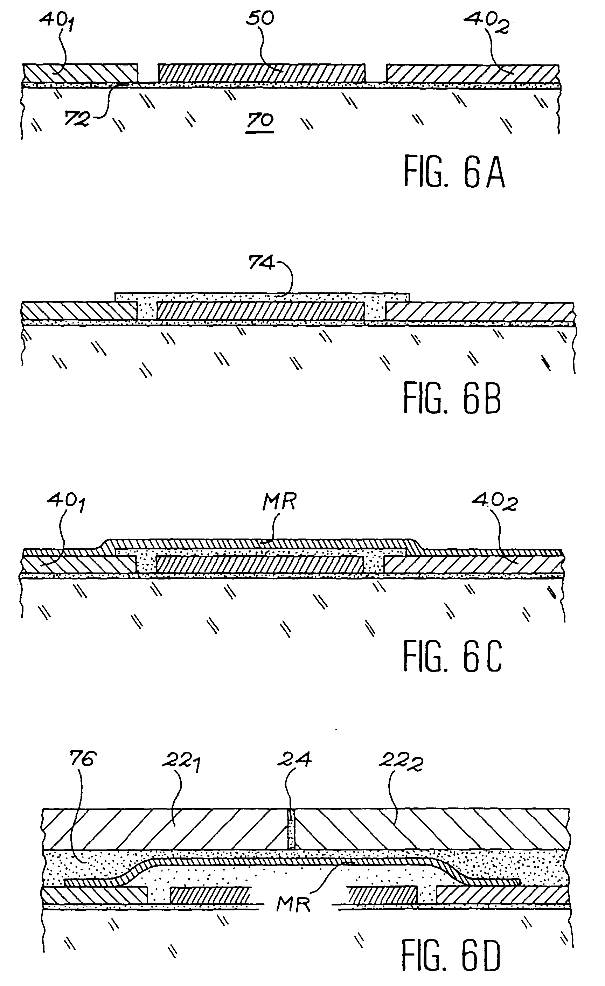

On dépose ensuite (fig. 6B) une couche isolante 74 que l'on grave pour ne la laisser subsister qu'au centre.

Puis on dépose une couche de matériau magnétorésistif multicouche (Fig. 6C). On grave cette couche pour lui donner la longueur et la largeur voulue. On obtient alors l'élément magnétorésistant MR.

On dépose enfin une nouvelle couche isolante 76 (Fig. 6D) et l'on forme les pièces polaires 22₁, 22₂ séparées par l'entrefer amagnétique 24 par tout moyen connu.

## Revendications

1. Tête magnétique de lecture comprenant un circuit magnétique comprenant deux pièces polaires (22₁, 22₂) séparées par un entrefer (24) et un ruban magnétorésistant plat (MR) constitué par une magnétorésistance multicouche et disposé sous les pièces polaires (22₁, 22₂) et sous l'entrefer (24), caractérisé en ce que le circuit magnétique est uniquement constitué par les deux pièces polaires (22₁, 22₂) et ne comprend qu'un entrefer unique, lesdites pièces polaires étant planes, la tête étant ainsi planaire, le ruban magnétorésistant plat (MR) comprenant un empilement de couches magnétiques séparées par des couches métalliques non magnétiques, cette magnétorésistance s'étendant longitudinalement sous les pièces polaires (22₁, 22₂) et sous l'entrefer unique (24) et travaillant en mode longitudinal.

2. Tête magnétique de lecture planaire selon la revendication 1, comprenant en outre deux contacts électriques (40₁, 40₂) aux deux extrémités de la magnétorésistance (MR).

3. Tête magnétique de lecture planaire selon la revendication 1, comprenant en outre un conducteur de polarisation (50) disposé transversalement.

4. Tête magnétique de lecture planaire selon la revendication 3, dans laquelle le conducteur de polarisation (50) est connecté électriquement en série avec le ruban magnétorésistant (MR).

5. Tête magnétique de lecture planaire selon la revendication 4, dans laquelle le conducteur de polarisation (50) est un matériau magnétorésistif.

6. Tête magnétique de lecture et d'écriture, comprenant une tête magnétique de lecture conforme à la revendication 1, et, en outre, un circuit magnétique de fermeture du flux magnétique (60₁, 60₂, 62₁, 62₂, 64) et un enroulement conducteur (68) magnétiquement couplé au circuit magnétique, la tête étant ainsi apte à fonctionner aussi bien en lecture qu'en écriture, la magnétorésistance (MR) n'étant pas en contact avec le circuit magnétique de fermeture du flux mais ayant ses extrémités disposées dans ledit circuit magnétique de fermeture du flux.

## Claims

1. Magnetic reading head comprising a magnetic circuit having two pole pieces (22₁, 22₂) separated by a head gap (24) and a flat magnetoresistant ribbon (MR) constituted by a multilayer magnetoresistance and placed beneath the pole pieces (22₁, 22₂) and beneath the head gap (24), characterized in that the magnetic circuit is solely constituted by the two pole pieces (22₁, 22₂) and only has a single head gap, said pole pieces being planar, so that the head is also planar, the flat magnetoresistant ribbon (MR) comprising a stack of magnetic layers separated by non-magnetic, metal layers, said magnetoresistance extending longitudinally beneath the pole pieces (22₁, 22₂) and beneath the single head gap (24) and operates in the longitudinal mode.

2. Planar magnetic reading head according to claim 1, also comprising two electric contacts (40₁, 40₂) at two ends of the magnetoresistance (MR).

3. Planar magnetic reading head according to claim 1, also comprising a transversely positioned polarization conductor (50).

4. Planar magnetic reading head according to claim 3, wherein the polarization conductor (50) is connected electrically in series with the magnetoresistance (MR).

5. Planar magnetic reading head according to claim 4, wherein the polarization conductor (50) is of magnetoresistive material.

6. Magnetic reading and writing head incorporating a magnetic reading head according to claim 1 and also comprising a magnetic flux closing circuit (60₁, 60₂, 62₁, 60₂, 64) and a conductor winding (68) magnetically coupled to the magnetic circuit, the head consequently being able to operate both in reading and writing, the magnetoresistance (MR) not being in contact with the magnetic flux closing circuit, but having its ends located in said magnetic flux closing circuit.

## Patentansprüche

1. Lesemagnetkopf mit einem Magnetkreis, der zwei durch einen Spalt (24) getrennte Polschuhe (22₁, 22₂) und einen ebenen bzw. flachen, unter den Polschuhen (22₁, 22₂) und unter dem Spalte (24) angeordneten und durch eine magnetoresistente Schicht gebildeten magnetoresistenten Streifen (MR) umfasst,
**dadurch gekennzeichnet,**
dass der Magnetkreis nur durch die beiden Polschuhe (22₁, 22₂) gebildet wird und nur einen einzigen Spalt umfasst, wobei die genannten Polschuhe eben sind, der Kopf somit planar ist und der ebene magnetoresistive Streifen (MR) einen Stapel magnetischer Schichten umfasst, die durch unmagnetische metallische Schichten getrennt sind, und diese Magnetoresistenz sich longitudinal unter den Polschuhen (22₁, 22₂) und unter dem einzigen Spalt (24) erstreckt und im Longitudialmodus arbeitet.

2. Planarer Magnetkopf nach Anspruch 1, der außerdem zwei elektrische Kontakte (40₁, 40₂) an den beiden Enden der Magnetoresistenz (MR) umfasst.

3. Planarer Magnetkopf nach Anspruch 1, der außerdem einen quer angeordneten Polarisationsleiter (50) umfasst.

4. Planarer Magnetkopf nach Anspruch 3, bei dem der Polarisationsleiter (50) elektrisch mit dem magnetoresistiven Streifen (MR) in Serie geschaltet ist.

5. Planarer Magnetkopf nach Anspruch 4, bei dem der Polarisationsleiter (50) ein magnetoresistives Material ist.

6. Lese-Schreibmagnetkopf mit einem Lesemagnetkopf nach Anspruch 1 und außerdem einem den Magnetfluss schließenden Magnetkreis (60₁, 60₂, 62₁, 62₂, 64) und einer magnetisch mit dem Magnetkreis gekoppelten leitende Wicklung (68), wobei der Kopf sowohl lesen als auch schreiben kann und die Magnetoresistenz (MR) nicht in Kontakt mit dem den Magnetfluss schließenden Magnetkreis ist, sondern ihre Enden in dem genannten, den Magnetfluss schließenden Magnetkreis angeordnet sind.
